# EUROPEAN PATENT APPLICATION

(11) **EP 4 316 317 A1**
(43) Date of publication of application: **07.02.2024**
(21) Application number: 22719644.1
(22) Date of filing: 21.03.2022
(51) Int. Cl.: A47J 31/36, B65D 83/04, B65D 85/804

(54) **SINGLE-PORTION CARTRIDGES, SYSTEMS AND PROCESSES INCLUDING SAID CARTRIDGES**

(30) Priority: 22.03.2021 PT 2021117132
(71) Applicant: Novadelta - Comércio e Indústria de Cafés, Unipessoal Lda, 1950-041 Lisboa (PT)
(72) Inventor: NABEIRO, Rui Miguel, 7370-112 CAMPO MAIOR (PT); DE FIGUEIREDO BRANCO, João André, 1885-091 MOSCAVIDE (PT); DA SILVA FERROLHO MENDES, Tiago Rafael, 1300-001 LISBOA (PT); FIGUEIRA BARROS DOS REIS, Claudia, 1495-130 LISBOA (PT)
(74) Representative: Ferreira Pinto, Francisca
(86) International application number: PCT/PT2022/050012
(87) International publication number: WO 2022/203530

(57) **Abstract**

The present invention refers to cartridges (1, 1') adapted for collecting and supplying single portions (2) of edible substances, said cartridges (1, 1') being adapted for functional connection to apparatus (10) for preparing edible products, such as aromatic beverages, for example espresso type coffee, whereby the cartridges (1, 1') present advantageous configurations of single portions (2), in particular in the form of previously compacted tablets, and package (3) for collecting these.

The present invention further refers to systems and processes of operation of systems that include this type of cartridges (1, 1').

## Description

### Field of the Invention

The present invention refers to the field of cartridges for collecting single portions of edible substances, such as for example roasted and ground coffee beans, as well as to systems and processes of distribution of edible products, such as for example espresso coffee and other coffee-based beverages, including apparatuses operated with said cartridges.

### Background of the Invention

The distribution of coffee beans to consumption locations where beverage preparation apparatus are operated based upon single portions, for example of roast and ground coffee beans. It is further known the possibility of operating this type of apparatuses based upon cartridges comprising a plurality of single portions.

In particular there are known beverage preparation systems whereby said cartridges can be associated with the apparatus and so that can be operated by discharge dispositions that can regulate the supply of single portions. In general, said cartridges include a plurality of single portions arranged in an adjacent spatial relation relative to each other, for example in a stack. The single portions comprise a quantity of edible substance and a respective individual package, including in a gas-barrier material, for example in the form of a metallic capsule, or in a filter-like material, for example in the form of a paper pod. Typically, the single portions are therefore operated by means of interacting with a respective package.

The document EP 1002490 A1 discloses a beverage preparation apparatus that presents a cartridge adapted so that can collect a plurality of single portions and supply these successively to a discharge disposition that provides functional connection between the cartridge and a beverage preparation device.

The documents EP 1334678 A2, EP 104366 B1, EP 1247481 B1, EP 1295553 A1, EP 1962654 B1, EP 2139369 B1 and EP 2958467 B1 also disclose beverage preparation systems including cartridges that can collect a plurality of single portions and be operated by discharge dispositions of beverage preparation apparatuses.

The prior art also includes solutions of cartridges configured as dispensers of single portions, so that a user can thereafter supply these by to a beverage preparation apparatus. The documents EP 1744650 B1, EP 1949833 A1 and WO 2014/135677 A1 disclose solutions of this type. In this case, cartridges can be manually removed and loaded with single portions for posterior delivery to user.

### General Description of the Invention

A first objective of the present invention is to provide a cartridge for collecting a plurality of single portions of edible substance, such as for example roasted and ground coffee beans, for preparing an edible product, such as for example a beverage by means of coffee extraction, said cartridge presenting lower operation costs and less use of materials, in particular packaging materials, including recyclable or not, as well as greater physic-chemical affinity between packaging materials and edible portions.

This objective is solved according to the present invention by means of a cartridge according to claim 1.

In particular, this objective is solved by means of a cartridge including a package that confines a plurality of single portions that consist in a given quantity of aromatic edible vegetal substance, for example coffee, optionally further compounds derived from at least one of: a vegetal substance, an edible vegetal substance, an aromatic edible vegetal substance, and an aromatic edible vegetal substance that is present in the single portion, for example coffee.

According to a first aspect, the package confines only substances and/or compounds of vegetal origin, including the aromatic edible vegetal substance of the single portions.

The single portions can comprise, preferentially consist of aromatic edible substance, such as roast and ground coffee beans.

The single portions can comprise an aromatic edible substance and an edible coating including compounds derived from at least one of: a vegetal substance, an edible substance, an aromatic edible vegetal substance, the aromatic edible vegetal substance of the single portions.

The single portions are advantageously devoid of an envelope presenting a shape or volume different from the shape or volume occupied by the compacted tablet, or in a material different from the edible substance, so that the edible substance provides at least part, preferentially at least most part, particularly preferentially the totality of its exterior surface.

The single portions can be devoid of an envelope not including any compounds similar to compounds present in the edible substance or in respective raw material, for example green coffee beans.

The single portions can present an edible coating that extends in the exterior surface of the compacted tablet without changing the shape thereof.

The single portions can be devoid of an envelope with at least one of: a filter function, a gas-barrier function, an UVs-barrier function.

It is preferred when the package itself mostly comprises, preferentially consists of at least one of: substances of vegetal origin, substances of edible vegetal origin and substances of aromatic edible vegetal origin.

It is preferred when at least a container part of the package can comprise, preferentially consist of substances and/or compounds derived from at least one of: a vegetal substance, an edible vegetal substance, an aromatic edible vegetal substance, the aromatic edible vegetal substance of the single portions.

The package can be devoid of materials of non-vegetal origin, and be adapted so as to provide at least one of: gas barrier and liquid barrier.

The package can include a plurality of single portions arranged inside of the package so that part of the edible substance of a single portion is in direct contact with part of the edible substance of an adjacent single portion.

The package can include a plurality of single portions arranged in a row, stack or similar, so that the single portions are adjacent to each other along a transversal direction of the package.

The single portion can be in the form of a previously compacted granulate or powder of aromatic edible substance, so as to maintain a previously determined form of compacted tablet.

The aromatic edible substance can be appropriate for preparing beverages, such as for example coffee, tea, chocolate or similar.

The single portion can be in the form of a compacted pod of roast and ground coffee beans, or of soluble coffee powder, presenting a weight between 4 g and 16 g, preferentially between 4 g and 12 g, more preferentially between 5 g and 9 g.

The compacted tablet can present a single central symmetry axis, and preferentially a rotation symmetric shape in top view, relative to the central symmetry axis.

The compacted table can present a cross section of circular shape only when seen in top or bottom view.

The compacted tablet can present a general shape of disc type, ring type or similar.

The compacted tablet can present a portion of lateral wall, when observed in side-view, that extends in a direction generally parallel to that of the central symmetry axis of the single portion, preferentially between at least most part of the extension between top and bottom surfaces.

The compacted tablet can present different top and bottom surfaces, being advantageous when the top surface is configured so that can be impinged by an upstream flow, and the bottom surface is configured so that can provide flow downstream of the tablet.

The compacted tablet can present an upstream-oriented cavity different from a downstream-oriented cavity, so that the contact surface with pressurized flow is bigger than the surface of intersection with a reference transversal plane.

The cartridge is adapted so that can collect a plurality of single portions in a continuous volume with gas barrier conditions relative to the exterior, preferentially inert gas and/ or in pressured atmosphere, particularly preferentially also protection from UVs, so as to simultaneously preserve the organoleptic properties thereof.

The cartridge can comprise a package that presents retention means adapted so that provide removable retention of the cartridge in functional connection with a retention disposition associated with the apparatus for preparing edible products.

The cartridge can comprise a package that presents retention means configured so that can provide package retention by means of mechanical engagement, including connection of the shape retention type, of the male-female type, of bayonet type or similar.

The cartridge can comprise a package that presents retention means provided in a closing part of the package of cartridge.

The cartridge can comprise a package that presents retention means provided in at least one of: an exterior and an interior surface of a closing part associated with the container part.

The cartridge can comprise a package that presents retention means operable along two movements, including a generally vertical movement and a rotation movement around a central axis of the cartridge, whereby it is preferred when said rotation movement does not exceed a rotation angle of 90°, preferentially does not exceed a rotation angle of 45°, particularly preferentially does not exceed a rotation angle of 30°.

The cartridge can comprise an exterior package that confines at least an interior package that collects an alignment of single portions in gas sealed manner.

Another objective is to provide systems of distribution and preparation of edible products more efficient in terms of the use of materials, including with a substantial reduction of package materials, and in terms of less complexity of operation of cartridges and apparatus for preparing edible products in such systems.

This objective is solved according to the present invention by means of a system according to claim 13.

In particular, the objective is solved by means of a system that includes a cartridge with a stack of single portions without envelope, and an apparatus for preparing edible products, including a retention disposition adapted so that provides operative connection of the cartridge in a top region of the apparatus, in particular in a region directly aligned above a device for preparing edible product.

In particular, the system can include at least one type of cartridge adapted to supply single portions devoid of substances from at least one of: non-vegetal origin, non-edible vegetal origin, non-aromatic edible vegetal origin, to at least one of: consumption location and product preparation apparatus.

The single portions can be supplied to a product preparation device by means of disposing the cartridge in operative position on the discharge disposition of an apparatus, or by means of disposing of the single portions inside of a discharge disposition of the apparatus.

In particular, the system can include a cartridge according to any of claims 1 to 12.

The system can include at least two types of cartridges that differ in at least one of: material of the container part, inclusion of an interior package or not, dimension and shape of the container part, dimension and shape of the closing part, colour of at least one of: container part and closing part.

Moreover, the system can include at least two types of apparatus for preparing edible products that differ in at least of: inclusion or not of cartridge, inclusion or not of cartridge retention disposition configured so that can collect at least part of the cartridge, including the closing part, or at least part of the cartridge, number of cartridge collections dispositions.

Another objective is to provide a process of operation that is more efficient and more ergonomic of operating cartridges and apparatus for preparing edible products and systems for distributing and preparing edible products.

The aforementioned objective is solved according to the present invention by means of a process according to claim 15.

In particular, the process can include successively supplying a plurality from a cartridge to a product preparation device so that the respective central symmetry axis result in an alignment similar to the direction of injection of pressurized flow into this device, and surface impinging the single portions with a pressurized flow directed in a prevailing direction similar to that of the central symmetry axis, whereby the surface impingement of single portions does not take place directly downstream of surface impingement of a non-edible substance.

In particular, the process can include a system according to any of claims 13 to 14.

In the context of the present application, the expression "package" means an item configured so as to jointly confine a plurality of single portions, including in a confinement adapted for at least one of: transport of single portions between a distribution location and consumption location, and discharge operation associated with an apparatus for preparing products, or associated with an apparatus for preparing a product, or being one of the components of said apparatus.

Examples of consumption locations include public consumption locations, such as for example cafés and restaurants, that include one or several apparatuses for preparation of beverages, and private consumption locations that include, for example, only one beverage preparation apparatus.

In said consumption locations there is at least one beverage preparation apparatus based upon roast and ground coffee beans or substance derived therefrom, such as for example espresso coffee and e similar.

The apparatus for preparing a product can include flow supply means and a product preparation device, for example aromatic beverages, in particular an extraction device adapted so that can carry out cycles of extraction of single portions of roast and ground coffee beans.

The apparatus can be adapted so that can supply a processing fluid at a pressure of at least 2 bar, preferentially at least 8 bar, and at a temperature of at least 60°C, preferentially at least 80°C, to an extraction device that can collect single portions.

The apparatus can further comprise supply means of pressurized and heated fluid, in flow connection with said beverage preparation device.

Examples of this type of beverage preparation apparatuses, for example including automatic machines for preparing espresso type coffee and similar beverages, are abundantly known in prior art such that one abdicates from a more detailed description thereof.

### Description of the Figures

The invention shall be hereinafter explained in greater detail based upon preferred embodiments and on the attached Figures.

The Figures show embodiments of the present invention in simplified schematic representations:
- Figure 1:: top and side views of a first embodiment of a single portion (2);
- Figure 2:: side view of a stack of single portions (2) de according to Figure 1;
- Figure 3:: top and side views of a second embodiment of a single portion (2');
- Figure 4:: side view of a stack of single portions (2') according to Figure 3;
- Figure 5:: side view of two embodiments of a first type of packages (3A, 3A');
- Figure 6:: side view of two embodiments of a second type of package (3B, 3B') with gas barrier;
- Figure 7:: top views of a first set of preferred embodiments of container parts (31);
- Figure 8:: top views of a second set of preferred embodiments of container parts (31);
- Figure 9:: side cut and top views of a first embodiment of the cartridge (1);
- Figure 10:: side cut and top views of a second embodiment of the cartridge (1);
- Figure 11:: side cut views of a third embodiment of cartridge (1');
- Figure 12:: side cut views of a fourth embodiment of cartridge (1), including first and second packages (3A, 3B);
- Figure 13:: side cut views of a fifth embodiment of cartridge (1);
- Figure 14:: side cut views of a sixth embodiment of cartridge (1), including first and second packages (3A, 3B);
- Figure 15:: first instant of placing a first embodiment of placing a cartridge (1) in operative position in an apparatus (10);
- Figure 16:: second instant of placing a first embodiment of placing a cartridge (1) in operative position in an apparatus (10);
- Figure 17:: first instant of placing a second embodiment of placing a cartridge (1) in operative position in an apparatus (10);
- Figure 18:: second instant of placing a second embodiment of placing a cartridge (1) in operative position in an apparatus (10);
- Figure 19:: second instant of placing a third embodiment of placing a cartridge (1) in operative position in an apparatus (10);
- Figure 20:: second instant of placing a fourth embodiment of placing a cartridge (1) in operative position in an apparatus (10);
- Figure 21:: flux diagram of a first embodiment of a process according to the invention;
- Figure 22:: flux diagram of a second embodiment of a process according to the invention.

### Description of preferred embodiments of the invention

The present invention shall be described based upon the case of systems for distribution and preparation of beverages, for example of espresso coffee type, for example of espresso coffee type, soluble coffee, tea or similar, without excluding other beverages. The reader is familiar with details of this type of systems, such as for example that they include an extraction device where the single portion can be retained and impinged by a pressurized flow in a prevailing flow direction, so that these details are not included in the description.

The cartridges (1) according to the present invention are adapted so that can collect and supply single portions (2) comprising a given quantity of an aromatic edible substance and devoid of a respective single package in a material of non-vegetal origin, in particular of non-edible vegetal origin, such as for example aluminium capsule, container of synthetic material, filter paper and similar, whereby the gas barrier function can be provided by the package (3) of cartridge that jointly collects a previously defined set of a plurality of single portions (2).

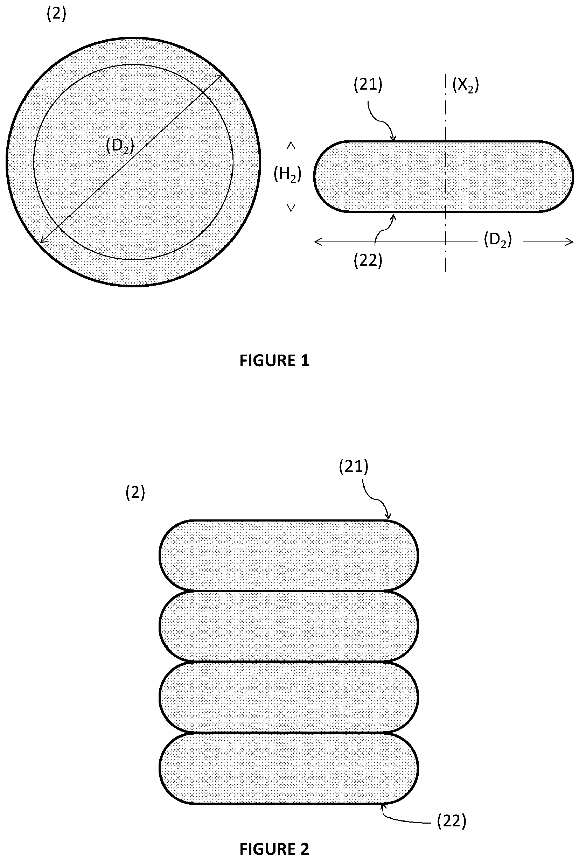

**Figures 1** to **4** represent first views of two preferred embodiments of single portions (2, 2') that can be collected in a cartridge (1).

In particular, the single portions (2) consist in a portion of edible substance, in particular a compacted tablet of granulate or powder of an aromatic edible substance, for example roast and ground coffee beans, so that keeps its volumetric shape.

Alternatively, the single portions (2) consist in a portion of edible aromatic substance and in an edible coating that includes compounds associated and/or derived from an edible vegetal substance, preferentially also aromatic, and that can be adapted so as to provide at least partial barrier function to liquids and/or to gases.

In this case, the single portions (2, 2') comprise previously compacted tablets and can include a nucleus portion of an aromatic edible vegetal substance, for example roast and ground coffee café, tea or similar, and an edible coating including compounds obtained from a substance of vegetal origin, preferentially edible vegetal. It is preferred when the edible coating has chemical affinities with the aromatic edible substance of the nucleus portion, for example it is obtained from coffee or from a coffee derivate.

The single portions (2) do not include, however, a package in a material that is different or non-derived from a vegetal substance, in particular different or non-derived from an edible vegetal substance. That is, the single portions (2) are devoid of materials of non-vegetal origin, including of metallic, synthetic, or generally non-biodegradable materials.

The single portions (2) can include or consist in a compacted tablet of a granulate or powder of the aromatic edible substance presenting a single central symmetry axis (X₂), and arranged in a previously determined and similar relative position of the respective central symmetry axis (X₂), including relative to an exit or discharge passageway of the package (3).

The single portions (2) can present a height extension (H₂) smaller than a width extension (D₂), preferentially presenting a general shape of disc type or similar, including different upstream, lateral and downstream-oriented surfaces.

The single portions (2) are preferentially configured so that respective portions of edible substance can only touch directly each other by a smaller part of the lateral surface or can only sit upon each other on a contact surface that is smaller than the upstream and downstream-oriented surfaces, preferentially on a region of annular shape proximal of the exterior perimeter of at least one of: the upstream and the downstream-oriented face.

The single portions (2) can be configured and disposed inside a package (3) according to at least one of:
- so that respective central symmetry axis (X₂) result in a previously defined alignment between each other, including in similar relative adjacent position, for example in stack along a longitudinal axis (X₃) of the package (3);
- so that the edible substance of a single portion (2) is in direct contact, or adjacent to, the edible substance of a neighbouring single portion (2), and so that a respective contact surface can confine at least most part of the exterior surface of the single portion (2) contained in the alignment projection of those neighbouring single portions (2).

The single portions (2, 2') can present a shape with upstream and downstream-oriented faces providing most part of its exterior surface, and both mostly extending along a direction transversal to the direction of the single central symmetry axis (X₂), thereby providing a similar crossing extension for the pressurized flow along at least most part of its characteristic dimension (D₂), and separated by a smaller part of the exterior surface in a lateral face.

The single portions (2, 2') can present a shape of disc, ring type or similar.

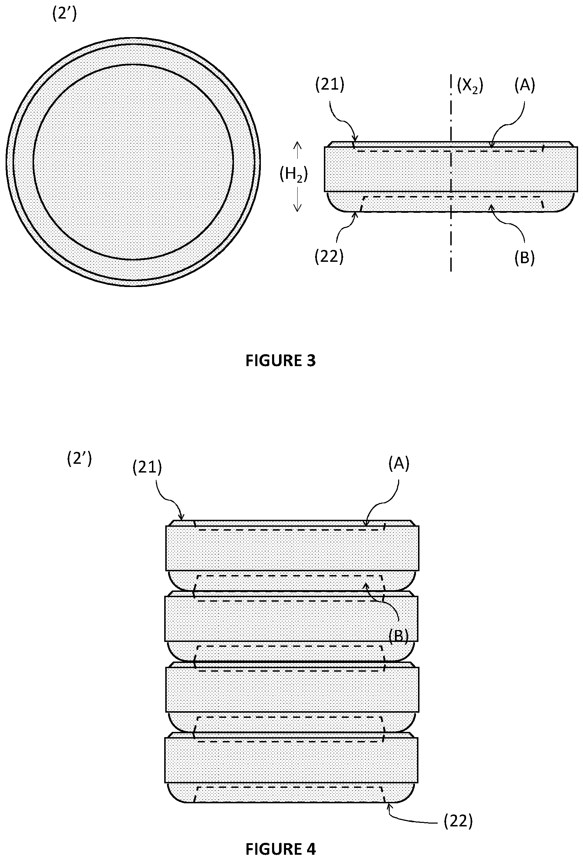

The single portions (2, 2') can present a symmetric shape in side-view (**Figures 1** and **2**), or an asymmetric shape (**Figures 3** and **4**) whereby the top face is adapted so that can be oriented upstream (21) and is different from the base face that is adapted to be oriented downstream, with relation to a prevailing flow direction.

Moreover, the single portions (2, 2') can present at least one of:
- a lateral cross section of asymmetric shape and preferentially comprising upstream and downstream faces of different format, and with a characteristic dimension, for example height (H₂), comprised between 5 and 15 mm, preferentially between 7 and 12,
- a top cross section of symmetric shape in rotation, preferentially circular, with a characteristic dimension (D₂), for example diameter, comprised between 20 and 60 mm, preferentially between 30 and 40 mm.

It has been demonstrated as particularly advantageous when the single portions (2') are configured so that adjacent single portions (2') are only in direct contact with portions of its side surface, such as for example in a portion of annular shape of the top surface, or upstream-oriented, and of the base surface, or downstream-oriented.

Moreover, is has been demonstrated as further advantageous when the single portions (2') configure a cylindrical format or similar, along at least most part of its lateral extension.

These characteristics can be recognized in the embodiment of single portions (2') represented in **Figures 3** and **4**.

A cartridge (1) can comprise a package (3) adapted so that the cartridge (1) can be operated retained in functional connection with its interior sealed to the ambient atmosphere.

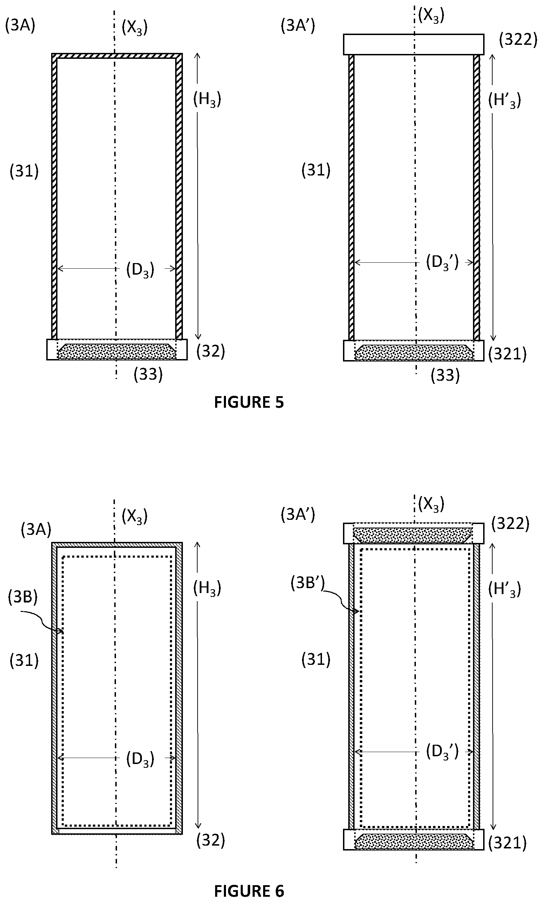

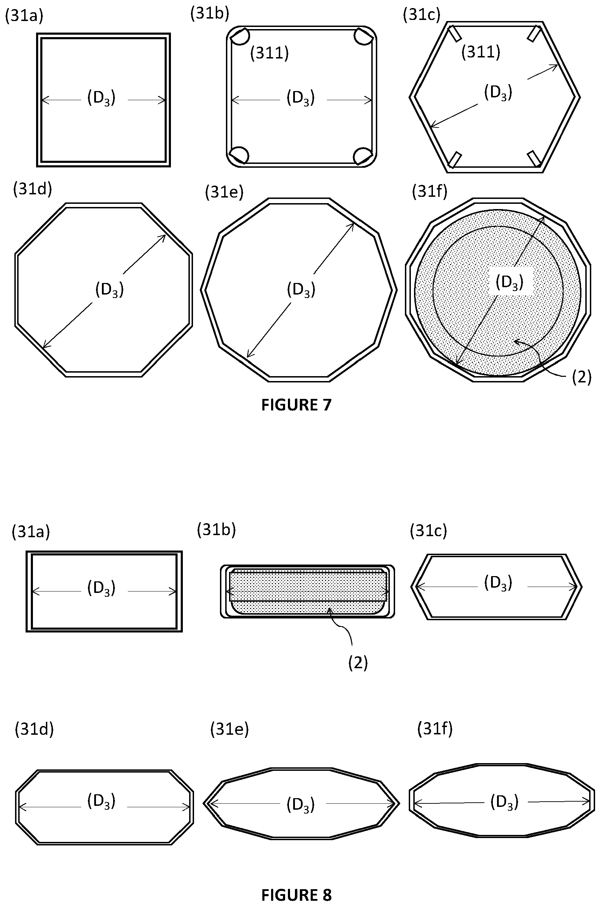

**Figures 5** to **8** represent preferred embodiments of the package (3; 3A, 3B) of a cartridge (1) according to the present invention.

The cartridge (1) can comprise at least one of: single portions (2) of an aromatic edible substance or of an edible substance and an edible coating that includes compounds derived from at least one of: a vegetal substance, an edible vegetal substance, preferentially further compounds obtained from an aromatic edible vegetal substance.

Moreover, at least part of, preferentially at least one of: exterior package (3A) and interior package (3B), particularly preferentially the totality of the package (3; 3A, 3B), includes compounds derived from at least one of: a vegetal substance, an edible vegetal substance, preferentially further compounds derived from an aromatic edible vegetal substance, particularly preferentially from the same aromatic edible vegetal substance as the one present in the compacted tablet of the single portions (2) .

The cartridge (1) can thus mostly contain, preferentially consist of, substances and/or compounds derived from at least one of: vegetal origin, edible vegetal origin, aromatic edible vegetal origin, preferentially including an aromatic edible vegetal present in the compacted tablets of the single portions (2).

The cartridge (1) can include a package (3) with a generally elongated and tubular shape along at least most part of its longitudinal extension, configured so as to contain at least one alignment of single portions (2) with respective central symmetry axis (X₂) aligned along a same direction, for example at least one stack of single portions (2).

According to one aspect, the package (3; 3A, 3B) presents a cross section with a shape that is different from the shape of cross section of the single portions (2). In particular, at least a part of package (3), preferentially at least an exterior package (3A) presents a non-circular cross section.

According to a particularly advantageous aspect, the package (3) can be configured so that presents an interior collection volume comprised between 1,03 and 1,20, preferentially between 1,05 and 1,10 times the sum of individual volume of the plurality of single portions (2).

The package (3) can present a container part (31) configured so that can collect a plurality of single portions (2), and at least a closing part (32) associated with a top edge of the container part (31) so that can provide gas-sealed closure thereof, and preferentially with a similar section, in particular bigger by only a clearance, than a section of single portion (2).

Moreover, at least a part of the package (3; 3A, 3B) can present a container part (31) that presents a characteristic dimension (D₃) comprised between 1,02 and 1,15 times, preferentially between 1,03 and 1,10 times, the characteristic dimension (D₂) of the single portions (2).

The package (3) can comprise a container part (31) and a respective closing part (32).

The package (3), or at least the container part (31), can present at least one of:
- a parallelepiped shape;
- an elongated and tubular shape along at least most of its longitudinal extension, and a cross section with a shape different from that of the single portions (2),
- a shape that can collect a plurality of interior packages (3B) arranged in adjacent manner along an alignment, for example stack or row.

The package (3) can comprise at least one of:
- an exterior package (3A) configured so that confines all the single portions (2) of the cartridge (1), and presenting at least two dimensions, for example width and height, similar to two corresponding dimensions of an alignment, for example stack or row, of single portions (2) ;
- an interior package (3B) provided inside of an exterior package (3A) and configured so that confines a plurality of single portions (2), and presenting at least two dimensions, for example width and height, similar to two corresponding dimensions of an exterior package (3A).

According to another aspect, at least the exterior package (3A) can be configured so that can be placed in a stable position upon a plane surface in at least one, preferentially any, of the lateral portions of the package (3), whereby it is preferred when the package (3) is adapted so that can exhaust inside air to the exterior, but not the reverse.

According to another aspect, at least part of the package (3; 3A, 3B), preferentially at least one of: an interior package (3B) and an exterior package (3A) can be provided in a material that includes, preferentially consists of, compounds associated or derived from at least one of: a vegetal substance, an edible vegetal substance, an aromatic edible vegetal substance.

At least the container part (31) of the exterior package (3A) can present conducting guides (331) configured as grooves that project radially towards the longitudinal axis (X₃) of the package (3) and that extend along the interior face of the container part (31), whereby the conducting guides (331) are preferentially adapted so that can conduct the single portions (2) at least until the discharge passageway.

At least the closing part (32) of the exterior package (3A) can present at least one of: different exterior perimeter and different interior perimeter of respective exterior and interior perimeters of the container part (31).

The cartridge (1) is adapted so that the package (3) and respective of single portions (2) can be retained in operative discharge position according to at least one of:
- retained by the closing part (32) of transversal dimension at least approximately similar to the transversal dimension of the discharge passageway of single portions (2);
- retained in a discharge disposition (11) configured in the exterior surface or casing apparatus (10), preferentially as a recess or cavity relative thereto.

Alternatively, the cartridge (1) can be adapted so that can be shape fitted in a corresponding part of apparatus (10), for example at least partially confined by the discharge disposition (11) .

Alternatively, the cartridge (1) can be adapted so that the alignment of single portions (2) can be collected inside of a discharge disposition (11), for example configured as an at least partially confined space inside the product preparation apparatus.

**Figures 5** and **6** show embodiments of packages (3; 3A, 3B).

According to a particular aspect of the present invention, at least the exterior package (3A) can comprise a container part (31) configured so that can collect a plurality of single portions (2), and at least a closing part (32) configured so that can close an opening portion of the container part (31), whereby at least one of the exterior and interior side walls of the closing part (32) can present a transversal dimension different from the respective exterior and interior side wall of the container part (31) .

In particular, it is advantageous when the closing part (32) presents a cross section with at least one of, preferentially both of, shape and characteristic dimension different from those of the cross section of the container part (31), whereby it is preferred when the closing part (32) presents a cross section of similar shape and characteristic dimension bigger by only a clearance than the characteristic dimension of the cross section of the container part (31).

The container part (31) and the closing part (32) can be configured so that can provide gas barrier, preferentially also barrier to UVs, particularly preferentially further confining an inert gas interior atmosphere.

A system of distribution of edible products, for example single portions (2) of previously roast and ground coffee beans for preparing espresso type coffee, can include two types of cartridges with respective packages (3, 3') that differ by at least one of: a dimension of the container part (31), the shape of the cross section of the container part (31), a dimension of the closing part (32), the shape of cross section of the closing part (32) .

As represented in **Figure 5**, the container part (31) can be associated with two closing parts (32) disposed in passageway openings on the mutually opposing top edges of the generally elongated format of the container part (31).

The container part (31) can present a generally elongated and tubular form.

The container part (31) can present a cross section with a characteristic dimension (D₃) that does exceed by more than 10%, preferentially does not exceed by more than 5%, the characteristic dimension, for example diameter (D₂), of the cross section of single portion (2), that is, of previously compacted edible substance.

The container part (31) can present a passageway in at least one top edge and be configured so that provides passageway to one single portion (2) in a position whereby its central axis is aligned with, or orthogonal relative to, the longitudinal axis of the container part (31).

The container part (31) can present a passageway in at least one top edge, whereby said passageway presents a cross measure that does not exceed 1,2 times, preferentially does not exceed 1,1 times, particularly preferentially is similar to the characteristic dimension (D₃) of the container part (31).

The container part (31) can present a longitudinal extension configured so that can collect at least 15 single portions (2), preferentially at least 20 single portions (2), particularly preferentially at least 40 single portions (2).

The container part (31) can present a longitudinal extension (H) with more than 0,10 m, preferentially more than 0,20 m, particularly preferentially more than 0,35 m, and less than 1,0 m, preferentially less than 0,80 m, particularly preferentially less than 0,70 m.

The container part (31) can present a wall thickness comprised between 0,05 mm and 3 mm, preferentially between 0,5 mm and 2 mm.

According to a particular aspect, the container part (31) of the package (3) of cartridge (1) presents a shape of cross section different from the shape of cross section of the single portion (2) .

**Figure 6** represents a plurality of embodiments of the container part (31). In particular, the container part (31) can present a cross section of quadratic shape, including square (31a), rectangular (31b), or prismatic, including pentagonal (31c), hexagonal (31d), octagonal (31e), decagonal (31f).

The container part (31) can present an interior cross section similar to the exterior cross section, along at least most part of the longitudinal extension of the container part (31).

The container part (31) can present a plurality of grooves (311) on the interior cross section, preferentially extending along a radial direction, so that can provide support of conduction of the single portions (2).

The container part (31) can present an interior cross section that includes a passageway of portions with a cross section of similar shape and dimension, in particular bigger by only a tolerance clearance, to the shape and dimension of the cross section of the single portions (2).

Moreover, the package (3) can present a container part (31) provided in an opaque material along most part or the totality of the lateral surface of the container part (31), and/or in a partially transparent material, for example along a longitudinal slot-like element, and adapted so that provides barrier to ultraviolet radiation, whereby the container part (3) is preferentially provided in a rigid material that maintains a consistent spatial form, in particular a tubular-like form, with a wall thickness smaller than 3 mm, preferentially smaller than 1 mm, particularly preferentially smaller than 0,5 mm.

According to another aspect of the present invention, a cartridge (1) comprises a package (3) adapted so that the cartridge (1) can be operated retained in functional connection and in sealed manner relative to the ambient atmosphere, whereby the closing part (32) of the package (3) can be adapted so that provides a gas sealed functional connection of the cartridge (1) in an operative position.

The cartridge (1) can present a closing part (32) configured so that can provide retention, recognition and sealing of a cartridge (1) in operative position, that is, when functionally connected to a respective discharge disposition (11) of an apparatus (10) for preparing edible products.

The closing part (32) can present a cross section with at least one of: a different characteristic dimension and a different shape from the cross section of the container part (31).

The closing part (32) can present a cross section with a circular, oval, quadratic or prismatic shape.

The closing part (32) can present a cross section with a characteristic dimension, for example diameter, bigger than the characteristic dimension (D₃) of the container part (31).

The closing part (32) can present a cross section with a characteristic dimension comprised between 1,01 and 1,20 times, preferentially between 1,03 and 1,10 times, the characteristic dimension (D₃) of the container part (31).

The closing part (32) includes a passageway of single portions (2) with a cross section of shape and characteristic dimension at least approximately similar to the shape and characteristic dimension of the cross section of portion of the passageway of the container part (31).

The closing part (32) can be configured so that can retain a closing element (331) that occupies the cross section of the passageway of single portions (2), and adapted so that provides gas sealing of this passageway and that can be manually removed.

The closing part (32) can be configured so that can retain sealing means (332) adapted so that can be compressed when the cartridge (1) is in operative position, and thereby provide gas sealing of the connection between the passageway of the container part (31) and a discharge disposition (11) associated with an apparatus (10).

At least the container part (31), preferentially also the closing part (32), can be provided in a recyclable material, preferentially in a compostable material that presents gas barrier properties.

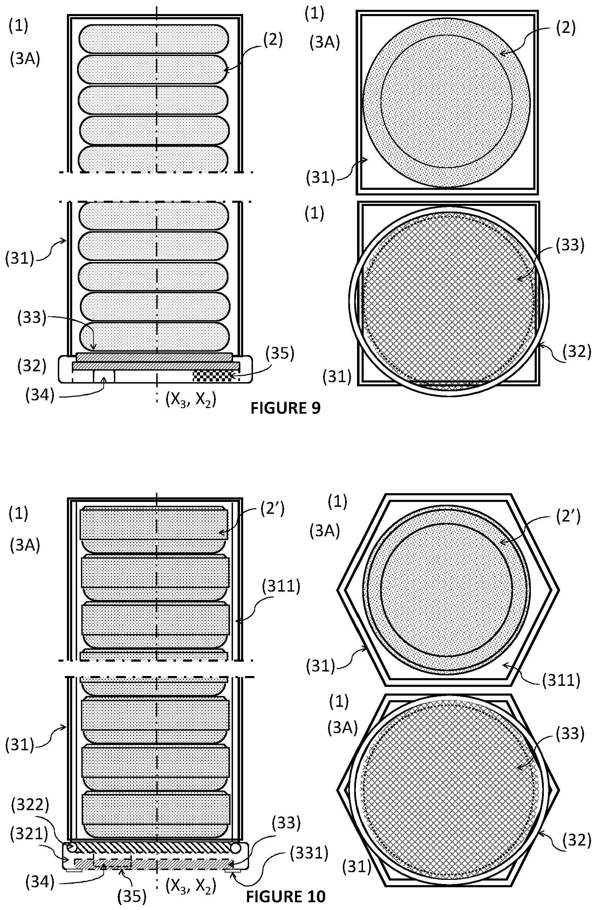

**Figures 9** to **14** represent several preferred embodiments of cartridges (1, 1') according to the present invention.

The cartridge (1) represented in **Figures 9** and **10** only includes an exterior envelope (3A) that includes a container part (31) preferentially provided in a rigid and gas barrier material and that confines a stack of single portions (2), preferentially at least 15, or at least 20, and at most 50, or at most 40, together with a closing part (32).

According to one aspect, the container part (31) and the closing part (32) can present at least one of: different exterior cross dimension and different exterior cross section.

According to a particular aspect, the closing part (32) can present at least one of: different interior characteristic dimension, for example diameter of the passageway, and different interior cross section, than the container part (31).

It is preferred when the container part (31) and the closing part (32) confine a passageway centred with the central symmetry axis (X₃) of the container part (31), and configured so that provides passageway of the single portions (2) with their central symmetry axis (X₂) with the same relative orientation as when inside the container part (31).

As can be observed, the container part (31) presents a shape of cross section, that is squared in the case of **Figure 9** and hexagonal in the case of **Figure 10**, different from the shape of cross section of the single portions (2), circular in both cases.

As further represented in **Figure 10**, the container part (31) can present conducting guides (311) projecting radially towards the central symmetry axis (X₃), configured in shape of grooves so as to conduct the single portions (2) with a contact surface in at least most part of the extension of the lateral projection of the single portions (2), but smaller than 10% of the lateral surface thereof.

The closing part (32) can present a shape of cross section of the passageway that is similar to that of the single portions (2) and a wall thickness that is bigger than the container part (31) .

It is preferred when in case of two packages (3) disposed side-by-side, only the respective closing parts (32) can be in direct contact.

The closing part (32) can be provided in a different piece of the container part (31) and adapted so that can be associated therewith in fixed manner, or in removable manner.

Moreover, the closing part (32) can present at least one of: closing means (33), retention means (34) and data means (35).

The package (3) can comprise a closing part (32; 32a, 32b) disposed at least in a top edge, preferentially also in base edge of the container part (31), whereby the closing part (32) preferentially presents a passageway of the package (3) configured so that can be closed gas sealed by a closing element (33).

In the case of the represented embodiments, the closing part (32) is configured so that can retain closing means (33) of the passageway, in the form of a lid that extends along at least part of the longitudinal extension of the closing part (32) and can be retained by pressured fitting in a perimeter region of the closing part (32).

The closing part (32) can further present retention means (34), preferentially disposed in a lateral interior face (Figure 9) or exterior face (Figure 10) thereof, adapted so that can provide engagement in the retention disposition (11) of an apparatus (10) for preparing an edible product.

The retention means (34) can be provided as at least one of: bayonet-like, male-female-like, screw-like, pressurized shape-fitting connection, or similar.

The closing part (32) can further present data means (35), for example in the form of symbols or code, advantageously arranged in an exterior lateral face (**Figure 9**) or in a base face (**Figure 10**) of the closing part (32), in particular so that can only be apprehended when in an angular position associated with an operative position of the cartridge (1) in a retention disposition (11) .

The data means (35) are adapted so that can be apprehended automatically by data apprehension means (14) operable in functional connection with control means com (15) of the apparatus (10) .

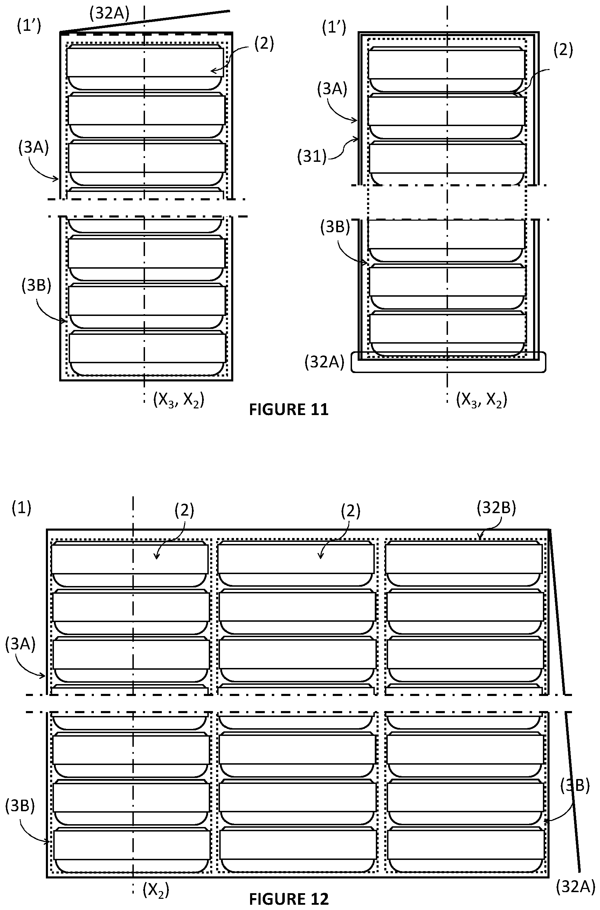

The cartridges (1') represented in **Figures 11** and **12** comprise an exterior package (3A) and an interior package (3B).

The exterior package (3) can be provided in a material that does not ensure gas barrier but barrier to UVs, for example in cardboard, and the interior package (3B) can be provided in a material that ensures gas barrier, and preferentially biodegradable.

In particular, it is preferred when the interior package (3B) is provided in a material that comprises compounds of vegetal substances, or obtained from at least one of: vegetal substance, edible vegetal substance, and aromatic edible vegetal substance, in particular corresponding to the single portion (2).

According to a particular aspect, the package (3) and the single portions (2) consist in materials that comprise compounds of vegetal substances, or obtained from at least one of: vegetal substance, edible vegetal substance, and aromatic edible vegetal substance, in particular corresponding to the single portion (2).

The interior package (3B) can be provided in a flexible material, non self-supporting, and presenting a container part (31) and a closing part (32) of easy manual opening, for example disposed in a top region and for example of the type closure by welding and weakened rupture zone for preferentially opening.

The cartridge (1) can present a prismatic shape adapted so that can collect a single interior package (3B), such as in the case of **Figure 11**, or a parallelepiped shape adapted so that can collect a plurality of interior packages (3B), such as in the case of **Figure 12**.

In the case of **Figure 12**, the shape and dimension of the closing parts (32A, 32B), as well as the exit direction of the single portions (2) and position thereof relative to the symmetry central axis (X₂) of the single portions (2), is different in the case of the closing parts (32A, 32B) of the exterior and interior packages (3A, 3B).

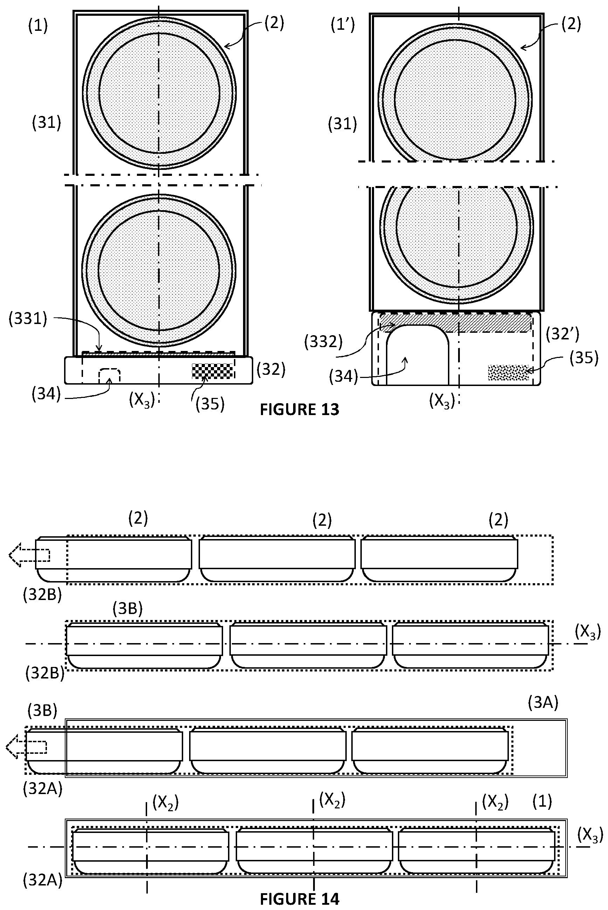

**Figure 13** represents cartridges (1) that in terms of their package (3) are similar to those of Figures 9 and 10, and **Figure 14** represents cartridges (1) similar to those of Figures 11 and 12, but whereby the single portions (2) are disposed with the respective central symmetry axis (X₂) oriented orthogonally relative to a longitudinal axis (X₃) of the package (3), whereby in a first case (**Figure 13**) the passageway is disposed in a base portion and the cartridge (1) can be operated in a vertical position, and in a second case (**Figure 14**) the passageway is in a lateral portion and the cartridge (1) can be operated in a horizontal position.

As further represented in **Figure 13**, the system can comprise different types of cartridges (1, 1') presenting closing parts (32, 32') that differ in at least one of: characteristic dimension, closing means (33), retention means (34) and data means (35).

In the case of this embodiment, the closing part (32) is configured so that can retain closing means (33) of the passageway in a position of transition between the container and closing parts (31, 32), so that delimits the presence of the single portions (2) inside of the container part (31), provided for example in the form of a film (331), retained for example by means of welding in a rim region, or a rigid disc-type element (332), retained by means of form-fitting in the region of the closing part (32).

Moreover, it is preferred when first and second types of cartridges (1, 1') can differ in at least one of:
- number of single portions (2), including if they are comprised between 15 and 50 units in the case of a first type (1), or if they are comprised between 50 and 1000 units in the case of a second type (1');
- volume and shape of the exterior shape (3A);
- material of the exterior package (3A);
- inclusion of not of an interior package (3B);
- inclusion or not of a closing part (32) adapted so that can be retained by retention means in the discharge disposition (11) of apparatus (10);
- type and/or shape of at least one of: closing means (33), retention means (34) and data means (35) associated with the closing part (32).

Moreover, the system can include at least one of:
- a first type of cartridge (1) adapted so that can be operatively retained in a discharge disposition (11) of apparatus (10), and
- a second type of cartridge (1') adapted so that can supply a first type of cartridge (1) that can be part of a second type of apparatus (10'), optionally adapted so that can be operatively retained in a discharge disposition (11) of apparatus (10').

One type of cartridge (1, 1') can be adapted so that can be retained in the apparatus (10) for preparation of product, or can be at least partially associated, collected or fitted in a discharge disposition (11) of apparatus (10), so that can supply a device (12) of preparation of edible product by means of a conduction disposition (13) devoid of actuation means.

At least one type of cartridge (10, 10') presents a discharge disposition (11) configured so that can collect an alignment of single portions (2) in gas sealed manner, and so that can supply an edible product preparation device (12).

The system can include at least one type of apparatus (10, 10') presenting a discharge disposition (11) configured so that can collect one alignment of single portions (2) in gas sealed manner, and so that can supply these to a device (12) for preparing edible products.

**Figure 14** represents a cartridge (1) with an exterior package (3A) and an interior package (3B), each one with container part (31) and closing part (32), whereby only one of the closing parts (32), preferentially only the closing part (32B) of the interior package (3B), provides closure with gas barrier.

Moreover, in this case, the shape and dimension of the closing parts (32A, 32B), as well as the direction of the single portions (2) out relative to the symmetry central axis (X₂) of single portions (2), is similar in the case of closing parts (32A, 32B) of the exterior and interior package (3A, 3B).

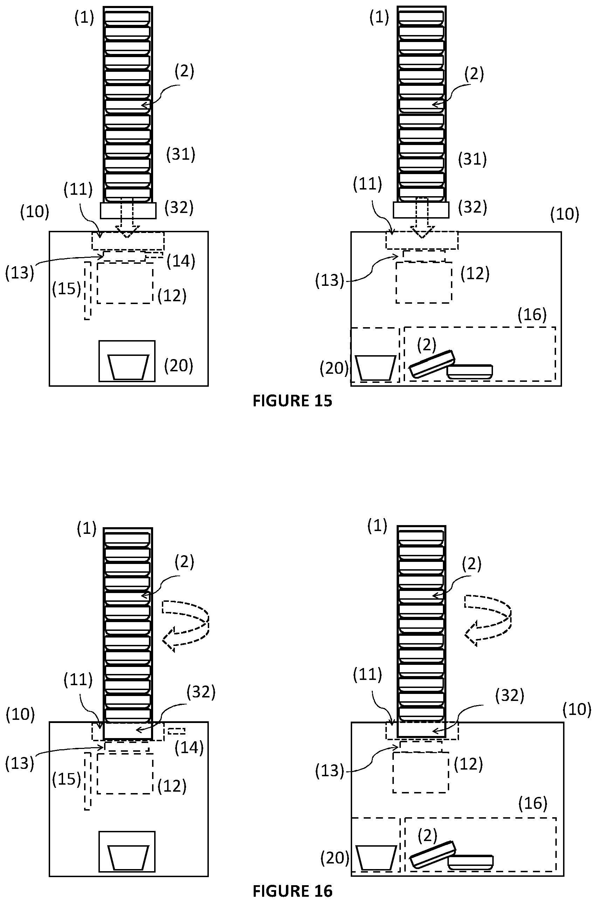

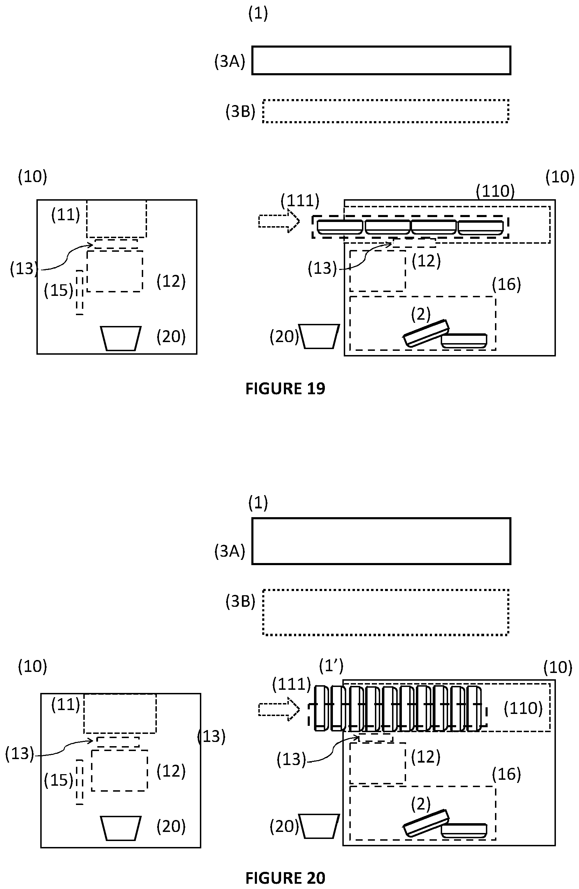

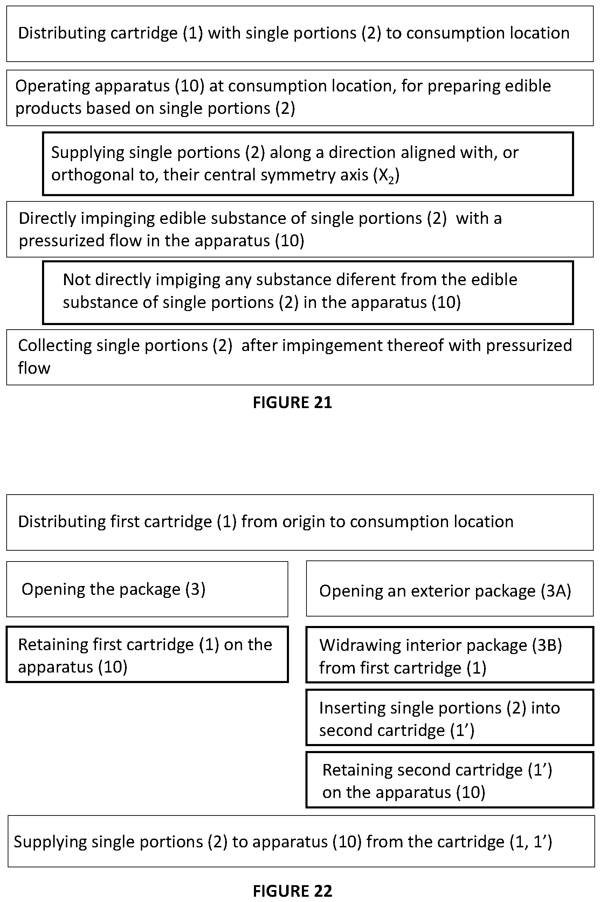

**Figures 15** to **19** represent preferred embodiments of systems for distribution and preparation of edible products according to the present invention that can also be interpreted based upon the embodiments of processes of operation represented in **Figures 20** and **21**.

In the case of a first embodiment, corresponding to a process represented in **Figure 20**, a cartridge (1) is supplied to a consumption location and can be operatively retained in a discharge disposition (11) of an apparatus (10), so that the edible portions (2) can be supplied to a product preparation device (12) along a direction aligned with its central symmetry axis (X₂).

The retention of cartridge (1) is advantageously carried out by retention means (34) associated with the closing part (32).

The regulation of discharge of the single portions (2) can be carried out by discharge means associated with a conduction disposition (13) and regulated by control means (15) configured so that can regulate the operation of the apparatus (10).

The apparatus (10) can include data apprehension means (14) adapted so that can apprehend data means (35) associated with the closing part (32) of the cartridge (1) when the latter is in a correct operative position. In this case, the data means (35) can be provided in a lateral wall of the closing portion (32) and the data apprehension means in an angular position of an interior lateral wall of the discharge disposition (11) corresponding to said operative retention position.

A residues collection disposition (16) only collects edible substances, in particular aromatic edible substances and water or other edible fluid.

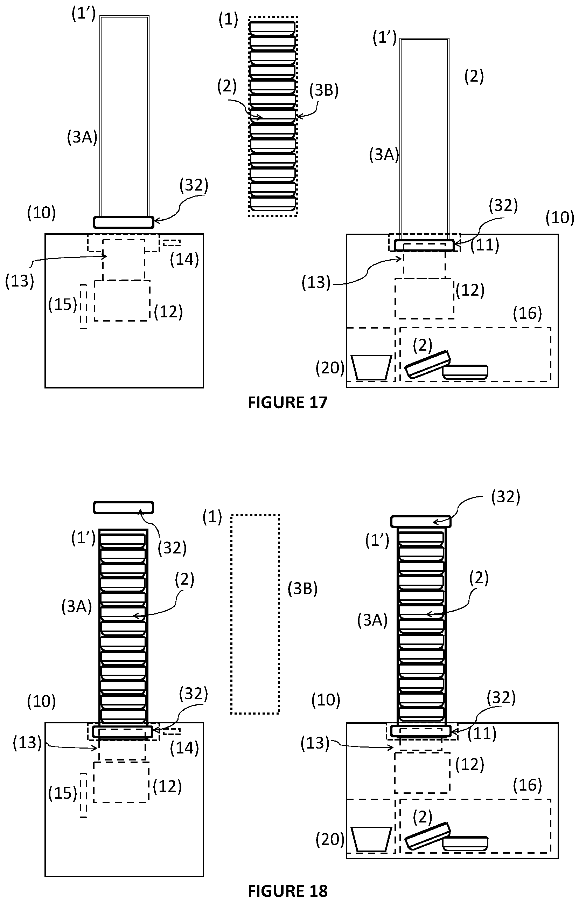

In the case of the embodiments of **Figures 17** and **18**, the system includes a first type of cartridge (1) adapted so that can be transported to a consumption location, whereby its exterior package (3A) can be opened so as to remove an interior package (3B) that confined a plurality of single portions (2) with gas barrier. The process of operation can basically follow the way represented on the right-hand side of the flow diagram of **Figure 22****.**

The interior package (3B) can be opened, and the single portions (2) can be supplied to a second type of cartridge (1') adapted so that can be operatively retained on the discharge disposition (11) of an apparatus (10).

The second type of cartridge (1') can be provided as being a part of apparatus (10), in particular a part adapted so that can be retained in removable manner in operative position in a discharge disposition (11).

The second type of cartridge (1') can be adapted so that can be removed from the discharge disposition (11) for simplicity of loading of the single portions (2), as represented in **Figure 17**, or so that can be removed only a portion of package (3), for example a closing part (32) disposed in the top region thereof, as represented in **Figure 18****.**

Alternatively, the system can include only one type of package (1) with an exterior package (3) and an interior package (3B), and the apparatus (10) can present a discharge disposition (11) configured as a collection cavity (110) adapted so that can collect a plurality of single portions (2), eventually further presenting a retention support (111), preferentially provided movable between open and closed positions, adapted so that can provide placement of single portions (2), as represented in **Figures 19** and **20** that represent a drawer-like arrangement of the discharge disposition (11) .

Alternatively, a cartridge (1) can supply single portions (2) along a direction orthogonal to the symmetry central axis (X₂), as in the case of **Figure 19**.

The single portions (2) are supplied, preferentially only by action of the gravity force, to a product preparation device (12) where they are impinged by a pressurized fluid flow. For example, water at a temperature between 80 and 98 °C, and a pressure above 2 bar, preferentially above 8 bar.

In particular, the pressurized flow does not impinge directly upon the surface of other than the edible substance of the single portion (2), that is, it does not directly impinge upon a respective packaging material.

## Claims

1. Cartridge (1) for collecting single portions (2), comprising:
- a plurality of single portions (2) comprising a compacted aromatic edible substance;
- a package (3; 3A, 3B) configured so that can confine a plurality of single portions (2) and so that provides gas barrier,
**characterized**
**in that** the package (3; 3A, 3B) only confines substances of vegetal origin, including the aromatic edible substance.

2. Cartridge (1) according to claim 1, **characterized**
**in that** the package (3; 3A, 3B) mostly comprises, at least in terms of portion thereof that provides gas barrier and/ or in terms of mass fraction, preferentially consists, in substances with at least one of the following origins: vegetal, edible vegetal, preferentially at least including a substance and/or composition with origin in the aromatic edible substance in the single portion (2).

3. Cartridge (1) according to claim 1 or 2, **characterized**
**in that** the package (3) is configured so that can collect at least one set of several single portions (2) on a common alignment of the respective central symmetry axis (X₂) and with direct contact only between substances of vegetal origin along said alignment, and
**in that** the package (3) is configured so that can collect at least 15, preferentially at least 20, particularly preferentially at least 30 single portions (2) in each alignment thereof.

4. Cartridge (1) according to any of claims 1 to 3, **characterized in that** the package (3) presents a passageway configured with a characteristic dimension so that provides passage one-by-one of the single portions (2), preferentially in a position where the respective central symmetry axis (X₂) are in a previously defined and similar position, including in a position aligned or orthogonal relative to a longitudinal axis (X₃) of the package (3) or the direction of movement of the single portions (2) out of the package (3), so that only a smaller part, preferentially so that no part of the exterior surface of the single portions (2) can touch on the perimeter of passageway.

5. Cartridge (1) according to any of claims 1 to 4, **characterized in that** the package (3) comprises:
- an exterior package (3A) provided in a semi rigid or rigid material, preferentially in a material that can provide barrier to ultraviolet radiation;
- an interior package (3B) provided in a flexible or semi rigid material, preferentially in a material that can provide gas barrier relative to the exterior,
whereby at least one of the exterior and interior packages (3A, 3B) is preferentially devoid of rounded exterior surfaces, and at least one of the exterior and interior packages (3A, 3B) is preferentially provided in a substance of vegetal origin.

6. Cartridge (1) according to any of claims 1 to 5, **characterized in that** the package (3) comprises at least one exterior package (3A) that includes a container part (31) of parallelepiped or prismatic shape, and with a transversal section of regular geometry, including pentagonal, hexagonal or similar, and a closing part (32) that presents a transversal section of similar shape and characteristic dimension bigger by only a clearance than the characteristic dimension of the single portions (2).

7. Cartridge according to any of previous claims, **characterized in that** the package (3) comprises at least one exterior package (3A) that presents one of:
- a closing part (32) that extends in a perimeter edge portion of the container part (31);
- a closing part (32) that extends in a portion different from the portion of the edge perimeter of the container part (31),
whereby the closing part (32) presents a portion, preferentially a portion at least of side wall, adapted so that can provide retention of the cartridge (1) in operative position so that the single portions (2) can exit the cartridge (1).

8. Cartridge according to any of the previous claims, **characterized in that** the package (3) comprises a closing part (32; 32a, 32b) associated with the perimeter portion of an edge region of the container part (31), including a portion of generally annular shape with a transversal section that delimits at least in proximity, a passageway configured with a similar projection format relative to the alignment of single portions (2), and adapted so that can provide removable retention of the cartridge
(1) in an operative position and so that the single portions
(2) can be driven by the gravity force through a respective passageway, preferentially only by the gravity force, preferentially through a gas sealed connection.

9. Cartridge according to any of the previous claims, **characterized in that** the package (3) presents a container part (31) and a closing part (32) that presents at least one of: different shape and different characteristic dimension from the transversal section of the container part (31), and/or
**in that** the package (3) presents a container part (31) and a closing part (32) that confines a passageway of the single portions (2), whereby at least one of: the exterior perimeter and the interior perimeter of the closing part (32) preferentially presents transversal sections of different characteristic dimensions, for example diameters, from the characteristic dimensions of the container part (31), and are preferentially in the vicinity of the side wall of the container part (31).

10. Cartridge according to any of the previous claims, **characterized**
**in that** the package (3) comprises a closing part (32) that presents a first closing portion (321) of annular-like shape configured so that can retain closing means (33) over the passageway, in particular adapted so that the closing means (33) provide sealing of the passageway of the package (3) relative to the ambient atmosphere.

11. Cartridge according to any of the previous claims, **characterized**
**in that** the package (3) comprises a closing part (32) that presents a second closing portion (322) that extends along a contour direction relative to the passageway, for example with a shape of annular type, and configured, preferentially in a compressible sealing material, so that can be impinged when the cartridge (1) is retained in operative position, thereby providing a gas sealed connection between the cartridge (1) and a respective discharge disposition (11).

12. Cartridge according to any of the previous claims, **characterized**
**in that** the package (3) comprises a closing part (32) presenting closing means (33) configured so that can close the passageway in a gas sealed manner, whereby the closing means (33) are preferentially configured as at least one of:
- a first closing part (331) of lid type, configured with a top portion in a disc shape and a perimeter rim portion of annular shape, so that can be retained on the closing part (32) externally to the passageway of the package (3), and
- a second closing part (332) of plug type, configured with a disc shape and so that can be retained on the closing part (32) at least in the vicinity of the container part (31), and
whereby it is preferred when the closing means (33) present or can be associated with an inviolability element (331) configured so that can signal a first opening or removal of the closing means (33) to a user.

13. System for preparing edible products, for example a beverage, and comprising:
- at least one type of cartridge (1, 1') with a plurality of single portions (2) disposed in a package (3), preferentially so that the respective central symmetry axis (X₂) result in a previously defined and similar alignment relative to each other and relative to a passageway of the package (3),
- at least one type of apparatus (10, 10') comprising a discharge disposition (11) and a product preparation device (12) adapted for operating a single portion (2),
whereby at least one type of cartridge (1) is adapted so that can be operatively retained in the discharge disposition (11) and thereby supply single portions (2) to the product preparation device (12) of apparatus (10),
whereby at least one type of apparatus (10) is adapted so that can supply a pressurized flow to the product preparation device (12) and thereby impinge the single portion inside (2) inside thereof,
**characterized**
**in that** the cartridge (1, 1') is adapted for supplying single portions (2) devoid of substances of non-vegetal origin, preferentially devoid of substances with an origin other than origin of the aromatic edible substance of the single portions (2), to at least one of: consumption location and product preparation apparatus (10), and
**in that** the apparatus (10) is devoid of means for piercing or shelling any part the single portions (1).

14. System according to claim 13,
**characterized**
**in that** the package (3) of the cartridge (1) includes at least one of:
- a material comprising at least one of: substances of vegetal origin, substances of edible vegetal origin, and substances of aromatic edible vegetal origin similar to that of the single portions (2);
- a closing part (32) adapted so that can provide at least one of:
- supplying single portions (2) one-by-one out of the cartridge (1), and
- operatively retaining in the apparatus (10), in supply connection of single portions (2),
preferentially one-by-one and driven only by the gravity force, particularly preferentially along a direction generally aligned with or orthogonal relative to relative to their single central symmetry axis (X₂).

15. Process for distributing and preparing edible products based upon cartridges (1, 1') including single portions (2) of an aromatic edible substance operable in cycles by apparatus (10) for preparation of edible products, for example aromatic beverages,
**characterized**
**in that** includes the following steps:
- successively supplying single portions (2) to a product preparation device (12);
- operating the product preparation device (12) including impinging the single portions (2) with a pressurized flow along a prevailing direction, similar to the central symmetry axis (X₂) of the single portions (2);
whereby impinging of single portions (2) does not include first impinging a non-edible substance provided as package of the single portion (2);
- collecting the edible product, for example a beverage in a drinking recipient (20), and
- collecting the single portions (2) downstream of the product preparation device (12), for example in a collection disposition (16) of the apparatus (10),
whereby operating the single portions (2) by the apparatus (10) does not include collecting a substance different from the aromatic edible substance or collecting a non edible substance.

16. Process according to claim 15, **characterized in that** the supply of single portions (2) to the product preparation device (12) in each product preparation cycle, includes at least one of:
- regulating the passage of the single portions (2) one-by-one in a region at least proximal of a generally downwards-oriented passageway of the discharge disposition (11),
- displacing the single portions (2) inside at least one of: package (3) and discharge disposition (11) by action of at least one of: the gravity force, an elastic force and a mechanic force;
- displacing the single portions (2) downstream of the discharge disposition (11) in a generally downwards direction, by action of the gravity force, preferentially only by action thereof, until reaching the product preparation device (12),
whereby the discharge disposition (11) is preferentially adapted so that provides gas sealing of the single portions (2) relative to the exterior of the apparatus (10).

17. Process according to claim 15 or 16, **characterized in that** further includes the steps:
- operatively retaining a first type of cartridge (1) on a discharge disposition (11) of apparatus (10);
- successively supplying single portions (2) to the product preparation device (12) along a single previously defined direction, preferentially along a direction generally aligned with, or orthogonal relative to the central symmetry axis (X₂) of the single portions (2);
- removing the cartridge (1) from the consumption location;
- refilling the cartridge (1) with a plurality of single portions (2) away from the consumption location;
- distributing the cartridge (1) to a consumption location where an apparatus (10) is operated, preferentially to the same consumption location.

18. Process according to any of claims 15 to 17, **characterized in that** further includes the steps:
- supplying a plurality of single portions (2) to a package (3), optionally to an interior package (3B), of at least a second type of cartridge (1'), preferentially so that respective central symmetry axis (X₂) result in a previously defined and similar alignment relative to each other;
- distributing a second type of cartridge (1') to a consumption location where an apparatus (10) is operated;
- opening an exterior package (3A) of the second type of cartridge (1');
- optionally removing an interior package (3B) from inside an exterior package (3A) of the second type of cartridge (1');
- opening the interior package (3B);
and further the step:
- disposing the single portions (2) inside the package (3) of a first type of cartridge (1) configured so that can be retained and operated by a discharge disposition (11) in the apparatus (10),
or
- disposing the single portions (2) inside of a discharge disposition (11) configured so that can collect at least one alignment of single portions (2) whereby the respective central symmetry axis (X₂) are oriented in a similar direction.
